(19) Europäisches Patentamt
European Patent Office
Office européen des brevets

(11) **EP 4 170 900 A1**

(12) **EUROPEAN PATENT APPLICATION**
published in accordance with Art. 153(4) EPC

(43) Date of publication:
26.04.2023 Bulletin 2023/17

(21) Application number: 20941045.5

(22) Date of filing: 29.12.2020

(51) International Patent Classification (IPC):
*H02S 50/10* (2014.01)

(52) Cooperative Patent Classification (CPC):
Y02E 10/50

(86) International application number:
PCT/CN2020/140475

(87) International publication number:
WO 2021/253790 (23.12.2021 Gazette 2021/51)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 17.06.2020 CN 202010553975

(71) Applicant: Sungrow Power Supply Co., Ltd.
Hefei, Anhui 230088 (CN)

(72) Inventors:
• YUN, Ping
Hefei, Anhui 230088 (CN)
• CUI, Xin
Hefei, Anhui 230088 (CN)
• XU, Jun
Hefei, Anhui 230088 (CN)

(74) Representative: Zacco Norway AS
P.O. Box 488 Skøyen
0213 Oslo (NO)

(54) **FAULT DIAGNOSIS METHOD AND DIAGNOSIS DEVICE**

(57) A fault diagnosis method and a diagnosis device provided in the present invention are applied to the technical field of photovoltaic power generation. Said method comprises: acquiring a high-irradiance IV data set and a low-irradiance IV data set of a diagnosis object, taking any one IV data set as a target IV data set, selecting, from the target IV data set, target IV data as inflection point data, taking the other IV data set as a reference IV data set, and selecting, from the reference IV data set, IV data having the same voltage value corresponding to the target IV data to serve as reference IV data. If the reference IV data also belongs to the inflection point data, a mismatch type of the diagnosis object is determined according to the target IV data and the result of the irradiation degree changing with the reference IV data. According to the present method, by analyzing the IV data under different irradiation conditions, whether the mismatch fault of the diagnosis object is a front current mismatch or a back current mismatch is determined, such that decoupling of a fault determination result of the diagnosis object is achieved, and the accuracy of fault diagnosis is improved.

Figure 1

## Description

The present application claims priority to Chinese Patent Application No. 202010553975.2, titled "FAULT DIAGNOSIS METHOD AND DIAGNOSIS DEVICE", filed on June 17, 2020 with the Chinese Patent Office, which is incorporated herein by reference in its entirety.

## FIELD

The present disclosure relates to the technical field of photovoltaic power generation, and in particular to a fault diagnosis method and a diagnosis device.

## BACKGROUND

IV data of a photovoltaic module or photovoltaic string refers to current-voltage data of the photovoltaic module or photovoltaic string during operation. In practical application, a detection device performs IV scanning on the photovoltaic module or photovoltaic string to obtain an IV data set. The data set includes multiple value pairs, and each value pair includes a current and a voltage at the same sampling time instant as the current. Since the IV data directly reflects an operation state of the photovoltaic module or photovoltaic string, the IV data is widely used in fault diagnosis of the photovoltaic module or photovoltaic string.

In most of diagnosis methods in the conventional technology, an IV curve is drawn based on the IV data set of a diagnosed object, i.e. the photovoltaic module or photovoltaic string. In a case that the IV curve includes an inflection point characterizing an abnormal operation of the diagnosed object, that is, the IV data set includes inflection point data, it is determined that the diagnosed object has a mismatch fault.

It is found that IV data of a double-sided module or string is a superposition of outputted features of a front module and a back module. Most of the conventional commonly used diagnosis methods are based on IV data of a single-sided module or string, which has good adaptability and diagnosis accuracy only for single-sided modules or strings. For double-sided modules or strings, the conventional diagnosis methods cannot determine a cause of a mismatch fault, that is, whether the mismatch fault is caused by a front current mismatch or a back current mismatch cannot be determined, which is difficult to meet actual application requirements.

## SUMMARY

A fault diagnosis method and a diagnosis device are provided according to the present disclosure. By analyzing IV data under different irradiance conditions, it is determined whether a mismatch fault of a double-sided module or string is a front current mismatch or a back current mismatch, so as to improve the accuracy of fault diagnosis, thereby meeting actual application requirements.

In order to realize the above objectives, the following technical solutions are provided according to the present disclosure.

According to a first aspect, a fault diagnosis method applied to a double-sided photovoltaic device is provided according to the present disclosure. The method includes:

acquiring a high-irradiance IV data set of a diagnosed object under an irradiance not less than a first preset irradiance and a low-irradiance IV data set of the diagnosed object under an irradiance not greater than a second preset irradiance, where the first preset irradiance is greater than the second preset irradiance;

selecting target IV data from a target IV data set as inflection point data, where the target IV data set is one of the high-irradiance IV data set and the low-irradiance IV data set;

selecting IV data corresponding to the same voltage as the target IV data from a reference IV data set as reference IV data, where the reference IV data set is the IV data set not taken as the target IV data set among the high-irradiance IV data set and the low-irradiance IV data set; and

determining, in a case that the reference IV data is inflection point data of the reference IV data set, whether the target IV data and the reference IV data follow a change of irradiance, and determining whether the diagnosed object has a front current mismatch or a back current mismatch according to a determination result.

In an embodiment, the determining whether the target IV data and the reference IV data follow a change of irradiance, and determining whether the diagnosed object has a front current mismatch or a back current mismatch according to a determination result includes:

determining whether the target IV data and the reference IV data follow a change of irradiance;

determining, in a case that the target IV data and the reference IV data follow the change of irradiance, that the diagnosed object has a back current mismatch; and

determining, in a case that the target IV data and the reference IV data do not follow the change of irradiance, that the diagnosed object has a front current mismatch.

In an embodiment, the determining whether the target IV data and the reference IV data follow a change of irradiance includes:
determining whether the target IV data and the reference IV data follow the change of irradiance according to a magnitude relationship between a current of the target IV data and a current of the reference IV data.

In an embodiment, the determining whether the target IV data and the reference IV data follow the change of irradiance according to a magnitude relationship between a current of the target IV data and a current of the reference IV data includes:

performing standardized conversion on the current of the target IV data and the current of the reference IV data abased on a preset reference condition to obtain a first current standard value corresponding to the current of the target IV data and a second current standard value corresponding to the current of the reference IV data;

calculating a difference between the first current standard value and the second current standard value to obtain a current difference;

determining, in a case that an absolute value of the current difference is less than a first preset current threshold, that the target IV data and the reference IV data do not follow the change of irradiance; and

determining, in a case that the absolute value of the current difference is not less than the first preset current threshold, that the target IV data and the reference IV data follow the change of irradiance.

In an embodiment, after the selecting IV data corresponding to the same voltage as the target IV data from a reference IV data set as reference IV data, in a case that the reference IV data is not inflection point data of the reference IV data set and the target IV data set is the high-irradiance IV data set, it is determined that the diagnosed object has a high-irradiance front current mismatch fault.

In an embodiment, after the selecting IV data corresponding to the same voltage as the target IV data from a reference IV data set as reference IV data, in a case that the reference IV data is not inflection point data of the reference IV data set and the target IV data set is the low-irradiance IV data set, it is determined that the diagnosed object has a low-irradiance front current mismatch fault.

In an embodiment, in a case that the target IV data serving as the inflection point data is not selected from the target IV data set, before the selecting IV data corresponding to the same voltage as the target IV data from a reference IV data set as reference IV data, the method further includes:

reading a component open circuit voltage in the high-irradiance IV data set and a component open circuit voltage in the low-irradiance IV data set to obtain a first open circuit voltage corresponding to the high-irradiance IV data set and a second open circuit voltage corresponding to the low-irradiance IV data set; and

determining whether the diagnosed object has a PID function failure according to a magnitude relationship between the first open circuit voltage and the second open circuit voltage.

In an embodiment, the determining whether the diagnosed object has a PID function failure according to a magnitude relationship between the first open circuit voltage and the second open circuit voltage includes:

calculating a difference between the first open circuit voltage and the second open circuit voltage to obtain a voltage difference; and

determining, in a case that an absolute value of the voltage difference is not less than a preset voltage threshold, that the diagnosed object has the PID function failure.

In an embodiment, after the calculating a difference between the first open circuit voltage and the second open circuit voltage to obtain a voltage difference, in a case that the absolute value of the voltage difference is less than the preset voltage threshold, the method further includes:

calculating a filling factor of the diagnosed object; and

determining, in a case that the filling factor is not greater than a preset filling factor threshold, that the diagnosed object has an aging fault.

In an embodiment, the calculating a filling factor of the diagnosed object includes:

converting the IV data in the high-irradiance IV data set based on a preset reference condition to obtain a standardized high-irradiance IV data set; and

calculating the filling factor of the diagnosed object based on standardized IV data in the standardized high-irradiance IV data set.

In an embodiment, the preset reference condition includes one of a test condition corresponding to the high-irradiance IV data set, a test condition corresponding to the low-irradiance IV data set, and a standard test condition STC.

According to a second aspect, a diagnosis device is provided according to the present disclosure. The diagnosis device includes a memory and a processor. The memory stores a program applicable for execution by the processor, to perform the fault diagnosis method according to the first aspect of the present disclosure.

With the fault diagnosis method according to the present disclosure, after a high-irradiance IV data set and a low-irradiance IV data set of a diagnosed object are acquired, any one of the IV data sets is taken as a target IV data set. Target IV data is selected from the target IV data set as inflection point data. The IV data set that is not taken as the target IV data set among the high-irradiance IV data set and the low-irradiance IV data set is taken as a reference IV data set. IV data corresponding to the same voltage as the target IV data is selected from the reference IV data set as reference IV data. In a case that the reference IV data is inflection point data in the reference IV data set, it is determined whether the target IV data and the reference IV data follow a change of the irradiance and it is determined whether the diagnosed object has a front current mismatch or a back current mismatch according to a determination result. With the diagnosis method according to the present disclosure, on the basis of the conventional technology, by analyzing IV data under different irradiance conditions, it is determined whether a mismatch fault of a double-sided module or string is a front current mismatch or a back current mismatch, so as to realize decoupling of determination of the front current mismatch fault and the back current mismatch fault of the diagnosed object, thus improving the accuracy of fault diagnosis.

## BRIEF DESCRIPTION OF THE DRAWINGS

In order to more clearly describe the technical solutions in the embodiments of the present disclosure or the technical solutions in the conventional technology, drawings to be used in the description of the embodiments of the present disclosure or the conventional technology are briefly described hereinafter. It is apparent that the drawings described below are merely used for describing the embodiments of the present disclosure, and those skilled in the art may obtain other drawings according to the provided drawings without any creative effort.

Figure 1 is a flowchart of a fault diagnosis method according to the present disclosure;

Figure 2 is a schematic diagram of an IV curve according to the present disclosure;

Figure 3 is a schematic diagram showing relationship between open circuit voltages and irradiances of a normal photovoltaic device according to the present disclosure;

Figure 4 is a schematic diagram showing relationship between open circuit voltages and irradiances of a faulty photovoltaic device according to the present disclosure; and

Figure 5 is a structural block diagram of a diagnosis device according to the present disclosure.

**DETAILED DESCRIPTION OF EMBODIMENTS**

Technical solutions of embodiments of the present disclosure are clearly and completely described below in conjunction with the drawings of the embodiments of the present disclosure. Apparently, the embodiments described below are only some embodiments of the present disclosure, rather than all the embodiments. Any other embodiments obtained by those skilled in the art based on the embodiments in the present disclosure without any creative effort fall within the protection scope of the present disclosure.

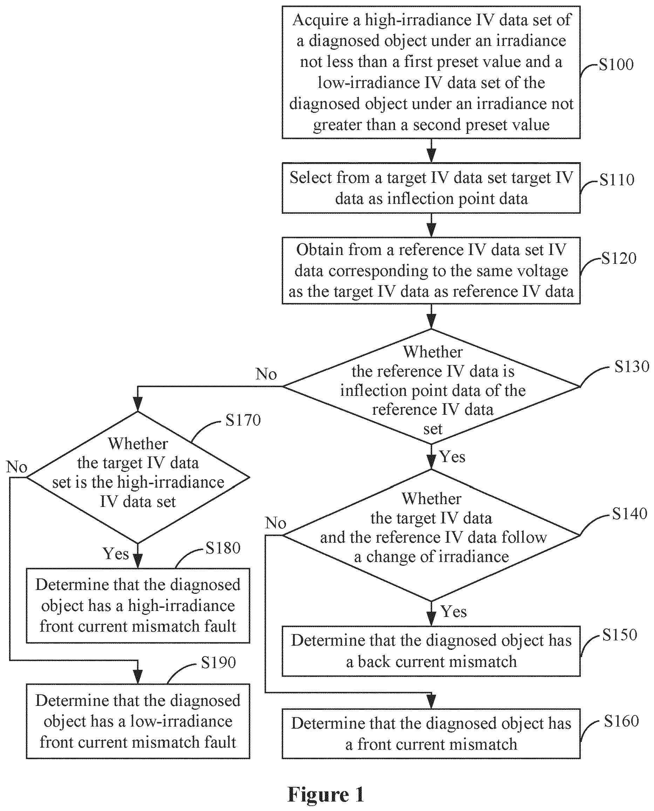

Reference is made to Figure 1, which is a flowchart of a fault diagnosis method according to an embodiment of the present disclosure. The fault diagnosis method according to the present disclosure is mainly applied to fault diagnosis of a double-sided photovoltaic device, such as a double-sided module or string. The method is applicable to an electronic device. The electronic device may be an electronic device having an ability of processing image and data, such as a notebook computer, a PC (personal computer), and a data server. Apparently, the electronic device may be implemented by a server on a network side in some cases. Referring to Figure 1, the fault diagnosis method according to an embodiment of the present disclosure may include the following steps S 100 to S190.

In step S100, a high-irradiance IV data set of a diagnosed object under an irradiance not less than a first preset value and a low-irradiance IV data set of the diagnosed object under an irradiance not greater than a second preset value are acquired.

As described above, the fault diagnosis method according to the present disclosure is mainly applied to fault diagnosis of a double-sided photovoltaic device such as a double-sided module or a double-sided string. Therefore, the diagnosed object mentioned in the embodiments of the present disclosure refers to a double-sided photovoltaic device such as a double-sided photovoltaic module or a double-sided photovoltaic string in practical application. Apparently, the diagnosed object may also be other photovoltaic device with a same or similar photovoltaic feature as the double-sided photovoltaic device.

Further, in the fault diagnosis method according to the embodiments of the present disclosure, in order to clarify acquisition conditions of the high-irradiance IV data set and the low-irradiance IV data set, the first preset value and the second preset value are set and the first preset value is greater than the second preset value. The IV data set acquired under an irradiance not less than the first preset value serves as the high-irradiance IV data set. Accordingly, the IV data set acquired under an irradiance not greater than the second preset value serves as the low-irradiance IV data set. For example, the first preset value may be set as 500W/m$^2$ and the second preset value may be set as 300W/m$^2$.

It should be noted that the IV data sets of the diagnosed object may be acquired by the detection device in the conventional technology with the conventional IV scanning method. A process of acquiring the IV data set is not limited in the present disclosure.

In step S110, target IV data is selected from a target IV data set as inflection point data.

It can be seen from the above steps that the embodiments of the present disclosure relate to the high-irradiance IV data set and the low-irradiance IV data set of the diagnosed object. The target IV data set here may be any one of the high-irradiance IV data set and the low-irradiance IV data set. That is, the high-irradiance IV data set may be selected as the target IV data set. Alternatively, the low-irradiance IV data set may be selected as the target IV data set.

It is understandable that under high irradiance, the photovoltaic device shows a typical output feature, and various errors in the IV scanning process have less impact on the output data. Therefore, in practical application, the high-irradiance IV data may be preferentially selected as the target IV data set.

In an embodiment, the inflection point data in the target IV data set may be selected with relevant methods in the conventional technology. For example, an IV curve may be drawn based on several IV data in the target IV data set, and then an inflection point may be determined based on a change of the IV curve. IV data corresponding to the inflection point is taken as the target IV data.

It should be noted that for the selection of the inflection point data in the target IV data set, there are two possible cases. In a first case, the inflection point data is selected. In this case, the above-mentioned target IV data is obtained. In another case, there is no inflection point data in the target IV data set. In this case, it is determined that the diagnosed object does not have a front current mismatch or a back current mismatch fault. For the second case, a method for determining whether the diagnosed object has a PID fault or an aging fault is further provided subsequently according to the present disclosure, which is not detailed here.

In an embodiment, considering that there may be some wrong data or interference data in both the high-irradiance IV data set and the low-irradiance IV data set in practical application, denoising processing such as data de-duplication, sorting, outlier filtering, and interpolation may be performed on the IV data sets before selection, which is not detailed here.

In step S 120, IV data corresponding to the same voltage as the target IV data is obtained from a reference IV data set, to obtain reference IV data.

Similar to the selection of the target IV data set, the reference IV data set in the embodiment of the present disclosure may be the high-irradiance IV data set or the low-irradiance IV data set. However, since one of the high-irradiance IV data set and the low-irradiance IV data set is selected as the target IV data set in S110, in this step the reference IV data set is the IV data set not taken as the target IV data set among the high-irradiance IV data set and the low-irradiance IV data set. For example, if the high-irradiance IV data set is taken as the target IV data set, the low-irradiance IV data set is taken as the reference IV data set.

In practical application, the IV data set includes several IV data, and each IV data includes two parameters, which are a voltage and a current. The diagnosis method according to the embodiments of the present disclosure performs fault diagnosis on the diagnosed object based on consistency of positions of inflection points. Therefore, after the target IV data is obtained, it is required to select the IV data corresponding to the same voltage as the target IV data from the reference IV data set, so as to obtain the reference IV data.

In step S130, it is determined whether the reference IV data is inflection point data of the reference IV data set. In a case that the reference IV data is the inflection point data of the reference IV data set, step S140 is performed. In a case that the reference IV data is not the inflection point data of the reference IV data set, step S170 is performed.

After the reference IV data is obtained, it is determined whether the reference IV data is the inflection point data of the reference IV data set. In an embodiment, a determination method may be with reference to the method of selecting inflection point data from the target IV data set, which is not repeated here.

In a case that the reference IV data is the inflection point data of the reference IV data set, step S140 is performed. In a case that the reference IV data is not the inflection point data of the reference IV data set, step S170 is performed.

In step S140, it is determined whether the target IV data and the reference IV data follow a change of the irradiance. In a case that the target IV data and the reference IV data follow the change of the irradiance, step S150 is performed. In a case that the target IV data and the reference IV data do not follow the change of the irradiance, step S160 is performed.

In a case that the target IV data set and the reference IV data set include inflection point data at the same voltage, it is determined that the diagnosed object has a current mismatch fault. However, it is difficult to accurately determine whether the current mismatch fault is the front current mismatch fault or the back current mismatch fault according to the above contents.

In the fault diagnosis method according to the embodiments of the present disclosure, it is required to further determine whether the target IV data and the reference IV data follow the change of the irradiance and determine whether the diagnosed object has the front current mismatch or the back current mismatch according to a determination result. In a case that the target IV data and the reference IV data follow the change of the irradiance, it is determined that the diagnosed object has the back current mismatch. In a case that the target IV data and the reference IV data do not follow the change of the irradiance, it is determined that the diagnosed object has the front current mismatch.

In an embodiment, a method for determining whether the target IV data and the reference IV data follow the change of the irradiance according to a magnitude relationship between a current corresponding to the target IV data and a current corresponding to the reference IV data is provided according to the embodiments of the present disclosure.

Specifically, considering that the reference IV data and the target IV data are acquired under different test conditions and external environments of the diagnosed object are different, it is required to convert the target IV data and the reference IV data according to a unified preset reference condition before comparing the currents.

In an embodiment, the preset reference condition in the embodiments of the present disclosure may be one of the test condition corresponding to the high-irradiance IV data set, the test condition corresponding to the low-irradiance IV data set, and STC (standard test condition). Apparently, the preset reference condition may also be other test conditions. Test conditions under which the IV data in the high-irradiance IV data set and the low-irradiance IV data set can be uniformly converted to the same standard are all optional, which belongs to the protection scope of the present disclosure on the premise of not exceeding the scope of the core idea of the present disclosure.

The standardized conversion process may be implemented with reference to the conventional technology. A commonly used conversion method is briefly described below. With the method, the IV data in the data sets is converted through a five-parameter model of a solar cell single diode.

Firstly, according to equations (1) to (4), by using the irradiance G and the temperature T of the photovoltaic module acquired in different irradiances, an open circuit voltage $V_{oc}$, a short circuit current $I_{sc}$, an equivalent series resistance $R_s$ of the photovoltaic module and an equivalent parallel resistance $R_{sh}$ of the photovoltaic module that are calculated based on the IV data sets, and referring to an open circuit voltage temperature coefficient $\beta$ and a short circuit current temperature coefficient $\alpha$ provided by the module manufacturer, the following parameters under the STC condition are acquired: an open circuit voltage $V_{oc.\ ref}$ under STC, a short circuit current $I_{sc.ref}$ under STC, an equivalent series resistance $R_{s.ref}$ of the photovoltaic module under STC, and an equivalent parallel resistance $R_{sh,ref}$ of the photovoltaic module under STC. Apparently, it is required to substitute the irradiance $G_{ref}=1000W/m^2$ and the standard temperature $T_{ref}=(273.15+25)K$ of the photovoltaic module under the STC condition into the equations.

Then a reverse saturation current $I_o$ under STC and a photogenerated current $I_L$, under STC are calculated according to equations (5) and (6) with combining $V_{oc.\ ref}$, $I_{sc.ref}$, $R_{s.ref}$ and $R_{sh,ref}$ that are obtained through the above calculations.

Finally, the above five parameters calculated under STC are substituted into equation (7) to obtain an IV equation under STC. All IV data in a data set under a non-STC condition is converted based on the IV equation to obtain an IV data set under the STC condition. In the embodiments of the present disclosure, the standardized conversion of the target IV data and the reference IV data are completed to obtain a first current standard value corresponding to the current of the target IV data and a second current standard value corresponding to the current of the reference IV data. The ideal battery factor a in relevant equations may be an empirical value, which is not limited in the present disclosure.

$$V_{OC} = V_{OC.ref} \cdot \left[ 1 + \beta \left( T - T_{ref} \right) + \frac{a}{60} \ln \left( G / G_{ref} \right) \right] \tag{1}$$

$$I_{SC} = I_{SC.ref} \cdot \frac{G}{G_{ref}} \left[ 1 + \alpha (T - T_{ref}) \right] \tag{2}$$

$$R_s = R_{s.ref} \cdot \frac{T}{T_{ref}} \left[ 1 - 0.217 \ln \left( \frac{G}{G_{ref}} \right) \right] \tag{3}$$

$$R_{sh} = R_{sh.ref} \cdot G_{ref} / G \tag{4}$$

$$I_L = \left( \frac{R_{s.ref} + R_{sh.ref}}{R_{sh.ref}} \right) \cdot I_{sc.ref} \tag{5}$$

$$I_o = \frac{I_L - V_{oc.ref} / R_{sh.ref}}{e^{V_{oc.ref} / a} - 1} \tag{6}$$

$$I = f(V) = I_L - I_0 (e^{\frac{V + I \cdot R_{s.ref}}{a}} - 1) - \frac{V + I \cdot R_{s.ref}}{R_{sh.ref}} \tag{7}$$

It should be noted that the standardized conversion of IV data may be performed immediately after the high-irradiance IV data set and the low-irradiance IV data set are acquired. After the standardized high-irradiance IV data set and the standardized low-irradiance IV data set are obtained, the subsequent selection of inflection point data is performed. The target IV data and reference IV data obtained in this case are already standardized data under the same standard. Therefore if the standardized conversion is performed immediately after the IV data sets are acquired, it is required to perform standardized conversion on each IV data in the IV data sets. The standardized conversion in this case requires to process more data and may consume more time and hardware resources, compared with the standardized conversion only performed on the target IV data and the reference IV data.

After the first current standard value corresponding to the current of the target IV data and the second current standard value corresponding to the current of the reference IV data are obtained, an difference between the first current standard value and the second current standard value is calculated to obtain a current difference. In a case that an absolute value of the current difference is less than a first preset current threshold, it is determined that the target IV data and the reference IV data do not follow the change of the irradiance. In a case that the absolute value of the current difference is not less than the first preset current threshold, it is determined that the target IV data and the reference IV data follow the change of the irradiance. The first preset current threshold may be determined according to the requirements on diagnoses accuracy and in combination with the noise and eigenvalue intensity of the IV curve corresponding to the IV data set. The value of the first preset current threshold is not limited in the present disclosure.

In step S150, it is determined that the diagnosed object has a back current mismatch.

In a case that the target IV data and the reference IV data follow the change of the irradiance, it is determined that the diagnosed object has the back current mismatch.

In step S160, it is determined that the diagnosed object has a front current mismatch.

In a case that the target IV data and the reference IV data do not follow the change of the irradiance, it is determined that the diagnosed object has the front current mismatch.

The principle that the fault diagnosis method according to the embodiments of the present disclosure realizes the decoupling identification of the front current mismatch fault and the back current mismatch fault is described below.

If the absolute value of the difference between currents of the diagnosed object at the same voltage, that is, the absolute value of the difference between the first current standard value and the second current standard value, is not less than the first preset current threshold, it indicates that a gain of a current at an inflection point is different from a gain of a current in the standardized conversion, which is caused by the back current mismatch rather than the front current mismatch.

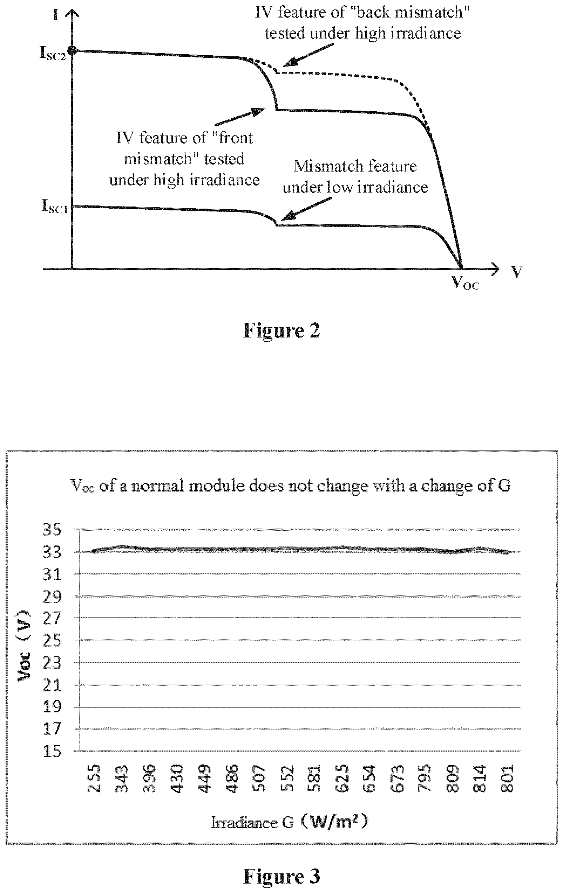

Specifically, reference is made to Figure 2, which is a schematic diagram of an IV curve according to the present disclosure. In the schematic diagram, assuming that there is mismatched inflection point data in the low-irradiance IV curve and there is mismatched inflection point data at the same voltage in the high-irradiance IV curve, it is required to further observe a gain of a current corresponding to the mismatched inflection point in the IV curve to decouple the "back current mismatch" and the "front current mismatch".

Figure 2 shows the "front current mismatch" and the "back current mismatch" having the same mismatch features under low irradiance and comparison between IV data corresponding to the "front current mismatch" and IV data corresponding to the "back current mismatch" under the same high irradiance. It is defined that a current gain (i.e. a ratio of short circuit current) of the diagnosed object under high irradiance and low irradiance is K, $K=Isc2/Isc1$. On this premise, if the mismatch feature under low irradiance is caused by "front current mismatch", as shown in Figure 2, a current gain of the mismatch inflection point is basically the same as that of other normal IV data points in the IV curve, because the front of the photovoltaic module directly utilizes the sunlight. If the mismatch fault under low irradiance is caused by "back current mismatch", the current gain of the mismatch inflection point is different from that of other normal IV data points in the IV curve, because this inflection point is introduced by "back current mismatch". In this case, the current gain of the inflection point is only outputted by a light receiving part on the back of the photovoltaic module rather than a light receiving part on the front of the photovoltaic module.

The influence of "back current mismatch" on the overall performance of the photovoltaic module depends on a proportion of light received by the back of the photovoltaic modules. The proportion is affected by factors such as irradiance, ground reflectivity, and spatial scattering, and generally ranges from 5% to 30%. Taking a proportion of the maximum 30% as an example and assuming that the current gain of normal IV data in the IV curve is K1, in a case of "back current mismatch", the current gain of the mismatch inflection point is 30%*K1, while in a case of "front current mismatch", the current gain of the mismatch inflection point is about K1. The current gains in the two cases are significantly different. With the fault diagnosis method according to the present disclosure, the front current mismatch fault and the back current mismatch fault of the diagnosed object are decoupled based on this feature.

In step S170, it is determined whether the target IV data set is the high-irradiance IV data set. In a case that the target IV data set is the high-irradiance IV data set, step S180 is performed. In a case that the target IV data set is not the high-irradiance IV data set, step S190 is performed.

In a case that the reference IV data is not the inflection point data of the reference IV data set, it indicates that the diagnosed object has the front current mismatch under only one irradiance. In this case, it is further determined whether the diagnosed object has the front current mismatch under high irradiance or the front current mismatch under low irradiance according to a source of the inflection point data.

In this step, it may be directly determined whether the target IV data set is the high-irradiance IV data set, to confirm a source of the target IV data serving as the inflection point data.

In step S180, it is determined that the diagnosed object has a front current mismatch fault under high irradiance.

In a case that the target IV data set is the high-irradiance IV data set, that is, the source of the inflection point data is from the high-irradiance IV data set, it is determined that the diagnosed object has a front current mismatch fault under high irradiance.

In step S190, it is determined that the diagnosed object has a front current mismatch fault under low irradiance.

In a case that the target IV data set is the low-irradiance IV data set, that is, the source of the inflection point data is from the low-irradiance IV data set, it is determined that the diagnosed object has a front current mismatch fault under low irradiance.

In summary, on the basis of the conventional technology, with the diagnosis method according to the present disclosure, by analyzing IV data under different irradiance conditions, it is determined whether the current mismatch fault of a double-sided module or string is the front current mismatch or the back current mismatch, so as to realize decoupling of determination of the front current mismatch fault and the back current mismatch fault, thereby improving the accuracy of fault diagnosis.

As mentioned above, in a case that there is no inflection point data in the target IV data set, it is determined that the diagnosed object has no current mismatch fault. In this case, a diagnosis method for determining whether the diagnosed object has a PID function fault and an aging fault is further provided according to the present disclosure.

It should be noted that the PID function fault and the aging fault are diagnosed on a basis that the diagnosed object does not have a current mismatch fault, this is because the PID function fault and the aging fault do not cause an inflection point of the IV data of the diagnosed object. Therefore, if the PID function fault and the aging fault are diagnosed on a basis that the diagnosed object has a current mismatch fault, the IV data of the diagnosed object will includes inflection point data, which results in an inaccurate diagnosis result of the PID function fault and the aging fault.

In an embodiment, in the process of performing IV scanning on the diagnosed object, the obtained IV data further includes a component open circuit voltage of the diagnosed object. Therefore, the high-irradiance IV data set and the low-irradiance IV data set of the diagnosed object are acquired based on the above steps, and a component open circuit voltage in the high-irradiance IV data set and a component open circuit voltage in the low-irradiance IV data set are read to obtain a first open circuit voltage corresponding to the high-irradiance IV data set and a second open circuit voltage corresponding to the low-irradiance IV data set.

Further, a typical feature of the photovoltaic module or string in an event of PID function fault is potential degradation, that is, an obvious change in output voltage. Therefore, it may be determined whether the diagnosed object has the PID function failure according to an amplitude relationship between the first open circuit voltage and the second open circuit voltage.

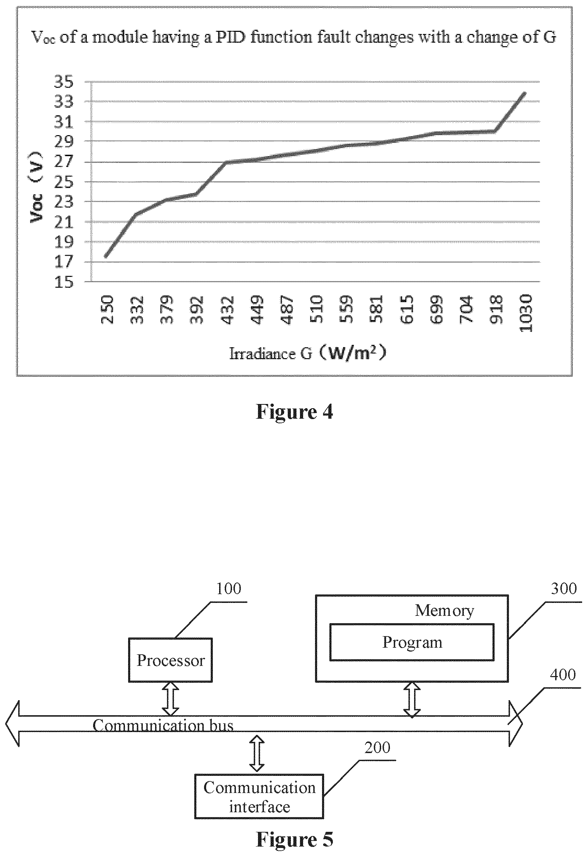

Specifically, in combination with Figure 3 and Figure 4, Figure 3 is a schematic diagram showing relationship between open circuit voltages and irradiances of a normal photovoltaic device according to the present disclosure, and Figure 4 is a schematic diagram showing relationship between open circuit voltages and irradiances of a faulty photovoltaic device according to the present disclosure. As can be seen from Figure 3, the open circuit voltage $V_{oc}$ of the normal photovoltaic device hardly changes significantly with a change of the irradiance G, that is, the open circuit voltage of the photovoltaic device is stable. While, in Figure 4, the open circuit voltage of the photovoltaic device having the PID function failure increases with an increase of the irradiance G

Based on the above actual situations, after the first open circuit voltage and the second open circuit voltage are obtained, a difference between the first open circuit voltage and the second open circuit voltage is calculated to obtain a voltage difference. In a case that an absolute value of the obtained voltage difference is not less than a preset voltage threshold, it indicates that the open circuit voltages of the diagnosed object under different irradiances are significantly different, and it is determined that the diagnosed object has the PID function failure. In a case that the absolute value of the obtained voltage difference is less than the preset voltage threshold, it is determined that the diagnostic object has no PID function fault.

In practical application, with the increase of service years of the photovoltaic module, the photovoltaic module is affected by ultraviolet radiation, water vapor erosion, cold and heat shock, so that the insulation performance of the photovoltaic module is reduced, the electronic leakage is increased, a conductor encapsulated inside is corroded and oxidized, resulting in aging of the photovoltaic module. The main features of aging include an increase of an equivalent series resistance of the photovoltaic module and a decrease of an equivalent parallel resistance of the photovoltaic module, which is comprehensively reflected in a decrease of a filling factor of the photovoltaic module.

Based on this, in a case of determining that the diagnosed object has no PID function fault, diagnosis of the aging fault of the diagnosed object is further performed according to the fault diagnosis method of the embodiments of the present disclosure.

In an embodiment, based on the preset reference condition described above, the IV data in the high-irradiance IV data set is converted to obtain a standardized high-irradiance IV data set. Then the filling factor of the diagnosed object is calculated based on the standardized IV data in the standardized high-irradiance IV data set.

In a case that the filling factor of the diagnosed object is not greater than a preset filling factor threshold, it is determined that the diagnosed object has the aging fault. In a case that the filling factor of the diagnosed object is greater than the preset filling factor threshold, it is determined that the diagnosed object has no aging fault.

It should be noted that in practice, the filling factor may also be calculated based on the low-irradiance IV data set. In addition, a method for calculating the filling factor may be with reference to calculation methods in the conventional technology. A process of calculating the filling factor is not limited in the present disclosure.

It should also be noted that the preset voltage threshold involved in the PID function fault and the preset filling factor threshold involved in the aging fault diagnosis may be set in combination with the output power of the diagnosed object and an acceptable power loss in operation. Values of the above thresholds are not limited in the present disclosure.

Figure 5 is a structural block diagram of a diagnosis device according to an embodiment of the present disclosure. Referring to Figure 5, the diagnosis device includes at least one processor 100, at least one communication interface 200, at least one memory 300 and at least one communication bus 400.

In the embodiments of the present disclosure, each of the numbers of the processor 100, the communication interface 200, the memory 300 and the communication bus 400 is at least one. In addition, the processor 100, the communication interface 200 and the memory 300 communicate with each other through the communication bus 400.

Apparently, communication connections between the processor 100, the communication interface 200, the memory 300 and the communication bus 400 shown in Figure 5 are optional.

In an embodiment, the communication interface 200 may be an interface of a communication module, for example, an interface of a GSM module.

The processor 100 may be a central processing unit CPU, an ASIC (Application Specific Integrated Circuit), or one or more integrated circuits configured to implement the embodiments of the present disclosure.

The memory 300 stores an application program, and may include a high-speed RAM memory or a non-volatile memory, for example, at least one disk memory.

The processor 100 is configured to execute the application program in the memory to perform any one of the embodiments of the fault diagnosis method described above.

The embodiments in this specification are described in a progressive way, each of which emphasizes the differences from others, and for the same or similar parts among the embodiments, one may refer to description of other embodiments. Since the device disclosed in the embodiments corresponds to the method disclosed in the embodiments, the description of the device is relatively simple, and for relevant matters, one may refer to the description of the method embodiments.

It should be further understood by those skilled in the art that the exemplary units and algorithm steps in the embodiments described herein can be implemented as electronic hardware, computer software, or a combination of computer software and the electronic hardware. In order to clearly illustrate the interchangeability of hardware and software, the composition and steps of each example have been described generally in terms of functions in the above description. Whether the functions being implemented in a hardware form or in a software form depends on a particular application of technical solutions and a design constraint. Skilled artisans may implement the described functions in varying ways for a particular application, but such implementation should not be interpreted as causing a departure from the scope of the present disclosure.

The steps of the method or algorithm described in connection with the embodiments disclosed herein may be directly implemented by hardware, a software module executed by a processor, or a combination thereof. The software module may be placed in a random access memory (RAM), a memory, a read only memory (ROM), an electrically programmable ROM, an electrically erasable programmable ROM, a register, a hard disk, a removable disk, a CD-ROM, or any other forms of storage medium known in art.

With the description of the embodiments disclosed above, those skilled in the art can implement or use the present disclosure. Numerous modifications to the embodiments are apparent to those skilled in the art, and the general principles defined herein may be implemented in other embodiments without departing from the core spirit or scope of the present disclosure. Therefore, the present disclosure may not be limited to the embodiments described herein, but should comply with the widest scope consistent with the principles and novel features disclosed herein.

**Claims**

1. A fault diagnosis method applied to a double-sided photovoltaic device, wherein the method comprises:

   acquiring a high-irradiance IV data set of a diagnosed object under an irradiance not less than a first preset value and a low-irradiance IV data set of the diagnosed object under an irradiance not greater than a second preset value, wherein the first preset value is greater than the second preset value;
   selecting, from a target IV data set, target IV data as inflection point data, wherein the target IV data set is one of the high-irradiance IV data set and the low-irradiance IV data set;
   obtaining, from a reference IV data set, IV data corresponding to the same voltage as the target IV data, as reference IV data, wherein the reference IV data set is an IV data set not taken as the target IV data set among the high-irradiance IV data set and the low-irradiance IV data set; and
   determining, in response to the reference IV data being inflection point data of the reference IV data set, whether the target IV data and the reference IV data follow a change of irradiance, and determining whether the diagnosed object has a front current mismatch or a back current mismatch according to a determination result.

2. The fault diagnosis method according to claim 1, wherein the determining whether the target IV data and the reference IV data follow a change of irradiance, and determining whether the diagnosed object has a front current mismatch or a back current mismatch according to a determination result comprises:

   determining whether the target IV data and the reference IV data follow a change of irradiance;
   determining, in response to the target IV data and the reference IV data following the change of irradiance, that the diagnosed object has a back current mismatch; and

determining, in response to the target IV data and the reference IV data not following the change of irradiance, that the diagnosed object has a front current mismatch.

3. The fault diagnosis method according to claim 2, wherein the determining whether the target IV data and the reference IV data follow a change of irradiance comprises:
determining whether the target IV data and the reference IV data follow the change of irradiance according to a magnitude relationship between a current of the target IV data and a current of the reference IV data.

4. The fault diagnosis method according to claim 3, wherein the determining whether the target IV data and the reference IV data follow the change of irradiance according to a magnitude relationship between a current of the target IV data and a current of the reference IV data comprises:

performing standardized conversion on the current of the target IV data and the current of the reference IV data based on a preset reference condition to obtain a first current standard value corresponding to the current of the target IV data and a second current standard value corresponding to the current of the reference IV data;
calculating a difference between the first current standard value and the second current standard value to obtain a current difference;
determining, in response to an absolute value of the current difference being less than a first preset current threshold, that the target IV data and the reference IV data do not follow the change of irradiance; and
determining, in response to the absolute value of the current difference being not less than the first preset current threshold, that the target IV data and the reference IV data follow the change of irradiance.

5. The fault diagnosis method according to claim 1, wherein after obtaining from the reference IV data set the IV data corresponding to the same voltage as the target IV data as the reference IV data, it is determined that the diagnosed object has a high-irradiance front current mismatch fault in response to the reference IV data being not inflection point data of the reference IV data set and the target IV data set being the high-irradiance IV data set.

6. The fault diagnosis method according to claim 1, wherein after obtaining from the reference IV data set the IV data corresponding to the same voltage as the target IV data as the reference IV data, it is determined that the diagnosed object has a low-irradiance front current mismatch fault in response to the reference IV data being not inflection point data of the reference IV data set and the target IV data set being the low-irradiance IV data set.

7. The fault diagnosis method according to claim 1, wherein in a case that there is no target IV data serving as the inflection point data in the target IV data set, the method further comprises: before selecting from the reference IV data set the IV data corresponding to the same voltage as the target IV data as the reference IV data,

reading a component open circuit voltage in the high-irradiance IV data set and a component open circuit voltage in the low-irradiance IV data set to obtain a first open circuit voltage corresponding to the high-irradiance IV data set and a second open circuit voltage corresponding to the low-irradiance IV data set; and
determining whether the diagnosed object has a PID function failure according to a magnitude relationship between the first open circuit voltage and the second open circuit voltage.

8. The fault diagnosis method according to claim 7, wherein the determining whether the diagnosed object has a PID function failure according to the magnitude relationship between the first open circuit voltage and the second open circuit voltage comprises:

calculating a difference between the first open circuit voltage and the second open circuit voltage to obtain a voltage difference; and
determining, in response to an absolute value of the voltage difference being not less than a preset voltage threshold, that the diagnosed object has the PID function failure.

9. The fault diagnosis method according to claim 8, wherein after calculating the difference between the first open circuit voltage and the second open circuit voltage to obtain the voltage difference and in a case that the absolute value of the voltage difference is less than the preset voltage threshold, the method further comprises:

calculating a filling factor of the diagnosed object; and
determining, in response to the filling factor being not greater than a preset filling factor threshold, that the diagnosed object has an aging fault.

**10.** The fault diagnosis method according to claim 9, wherein calculating the filling factor of the diagnosed object comprises:

converting IV data in the high-irradiance IV data set based on a preset reference condition to obtain a standardized high-irradiance IV data set; and
calculating the filling factor of the diagnosed object based on standardized IV data in the standardized high-irradiance IV data set.

**11.** The fault diagnosis method according to claim 4, wherein the preset reference condition comprises one of a test condition corresponding to the high-irradiance IV data set, a test condition corresponding to the low-irradiance IV data set, and a standard test condition STC.

**12.** A diagnosis device, comprising:

a processor; and
a memory storing a program applicable for execution by the processor, to perform the fault diagnosis method according to any one of claims 1 to 11.

Acquire a high-irradiance IV data set of a diagnosed object under an irradiance not less than a first preset value and a low-irradiance IV data set of the diagnosed object under an irradiance not greater than a second preset value ⎯ S100

↓

Select from a target IV data set target IV data as inflection point data ⎯ S110

↓

Obtain from a reference IV data set IV data corresponding to the same voltage as the target IV data as reference IV data ⎯ S120

↓

Whether the reference IV data is inflection point data of the reference IV data set ⎯ S130

No ←

Whether the target IV data set is the high-irradiance IV data set ⎯ S170

Yes ↓ (Whether S130) Yes ↓

Whether the target IV data and the reference IV data follow a change of irradiance ⎯ S140

No ←

Determine that the diagnosed object has a high-irradiance front current mismatch fault ⎯ S180

Yes ↓

Determine that the diagnosed object has a back current mismatch ⎯ S150

↓

Determine that the diagnosed object has a low-irradiance front current mismatch fault ⎯ S190

Determine that the diagnosed object has a front current mismatch ⎯ S160

**Figure 1**

**Figure 2**

**Figure 3**

Figure 4

Figure 5

## INTERNATIONAL SEARCH REPORT

| International application No. |
|---|
| **PCT/CN2020/140475** |

### A. CLASSIFICATION OF SUBJECT MATTER

H02S 50/10(2014.01)i

According to International Patent Classification (IPC) or to both national classification and IPC

### B. FIELDS SEARCHED

Minimum documentation searched (classification system followed by classification symbols)

H02S50, H01L31

Documentation searched other than minimum documentation to the extent that such documents are included in the fields searched

Electronic data base consulted during the international search (name of data base and, where practicable, search terms used)

数据库: CNABS; CNTXT; DWPI; SIPOABS; CNKI; IEEE 关键词: 双面, 正面, 背面, 故障, 识别, 判别, 诊断, 判定, 检测, 监测, 测试, 辐照, 照度, 光照, 电流-电压, 拐点, 拐角, 台阶, 阶梯, 凹, 失配, 遮挡, 遮阴; dual-surfaced, double-sided, frontal, back, rear, fault, detection, identify, diagnosis, monitoring, testing, irradiation, illumination, light, radiance, current-voltage, I-V, inflection point, mismatch

### C. DOCUMENTS CONSIDERED TO BE RELEVANT

| Category* | Citation of document, with indication, where appropriate, of the relevant passages | Relevant to claim No. |
|---|---|---|
| A | CN 109861644 A (SUNGROW POWER SUPPLY CO., LTD.) 07 June 2019 (2019-06-07) description paragraphs [0075]-[0153], figures 2, 7a | 1-12 |
| A | CN 109510595 A (HOHAI UNIVERSITY, CHANGZHOU) 22 March 2019 (2019-03-22) entire document | 1-12 |
| A | CN 105827200 A (HUAWEI TECHNOLOGIES CO., LTD.) 03 August 2016 (2016-08-03) entire document | 1-12 |
| A | JP 2013168591 A (NISSHINBO MECHATRONICS INC) 29 August 2013 (2013-08-29) entire document | 1-12 |
| PX | CN 111682846 A (SUNGROW POWER SUPPLY CO., LTD.) 18 September 2020 (2020-09-18) claims 1-12 | 1-12 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 March 2021** | **23 March 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/140475**

| Patent document cited in search report | | | Publication date (day/month/year) | Patent family member(s) | | | Publication date (day/month/year) |
|---|---|---|---|---|---|---|---|
| CN | 109861644 | A | 07 June 2019 | CN | 109861644 | B | 07 July 2020 |
| | | | | AU | 2019216664 | B2 | 03 December 2020 |
| | | | | EP | 3675353 | A1 | 01 July 2020 |
| | | | | US | 2020204111 | A1 | 25 June 2020 |
| | | | | CA | 3050788 | A1 | 24 June 2020 |
| | | | | AU | 2019216664 | A1 | 09 July 2020 |
| CN | 109510595 | A | 22 March 2019 | | None | | |
| CN | 105827200 | A | 03 August 2016 | EP | 3416283 | A1 | 19 December 2018 |
| | | | | US | 2018375471 | A1 | 27 December 2018 |
| | | | | EP | 3416283 | B1 | 11 November 2020 |
| | | | | CN | 105827200 | B | 03 May 2019 |
| | | | | EP | 3416283 | A4 | 20 February 2019 |
| | | | | WO | 2017148336 | A1 | 08 September 2017 |
| | | | | IN | 201817033762 | A | 02 November 2018 |
| JP | 2013168591 | A | 29 August 2013 | JP | 5922429 | B2 | 24 May 2016 |
| CN | 111682846 | A | 18 September 2020 | | None | | |

Form PCT/ISA/210 (patent family annex) (January 2015)

**EP 4 170 900 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010553975